# EUROPÄISCHE PATENTSCHRIFT

(11) **EP 1 560 636 B1**
(45) Veröffentlichungstag und Bekanntmachung des Hinweises auf die Patenterteilung: **26.09.2012**
(21) Anmeldenummer: 03784014.7
(22) Anmeldetag: 15.07.2003
(51) Int. Cl.: B01D 29/21, B01D 35/153

(54) **FLUESSIGKEITSFILTER, INSBESONDERE OELFILTER FUER KRAFTFAHRZEUGE**
LIQUID FILTER, ESPECIALLY AN OIL FILTER FOR MOTOR VEHICLES
FILTRE POUR LIQUIDE, NOTAMMENT FILTRE A HUILE POUR VEHICULES AUTOMOBILES

(30) Priorität: 06.08.2002 DE 10235902
(43) Veröffentlichungstag der Anmeldung: 10.08.2005
(73) Patentinhaber: MANN+HUMMEL GmbH, 71638 Ludwigsburg (DE)
(72) Erfinder: JAINEK, Herbert, 74074 Heilbronn (DE)
(74) Vertreter: Seyboth, Matthias
(86) Internationale Anmeldenummer: PCT/EP2003/007623
(87) Internationale Veröffentlichungsnummer: WO 2004/014515

(56) Entgegenhaltungen:
- WO-A-01/23068
- WO-A-02/36940
- WO-A-99/65589
- DE-A- 19 934 378
- US-A- 2 794 513
- US-A- 3 529 721
- US-A- 3 565 201
- US-A- 4 906 365
- US-A- 5 922 196
- US-A1- 2002 023 614

## Beschreibung

Die Erfindung bezieht sich auf einen Flüssigkeitsfilter, insbesondere auf einen Ölfilter für Kraftfahrzeuge, nach dem Oberbegriff des Anspruches 1.

Aus der DE 199 34 378 ist ein Filtersystem bekannt, bei dem ein Wechselfilter in einem Gehäuse angeordnet ist. Dieser Wechselfilter ist an einem Mittelrohr befestigt. Im Gehäuse ist im Bodenbereich ein Ventil angeordnet, das vom Filterelement betätigt wird und einen Flüssigkeitsablauf öffnet oder verschließt. Dieses Ventil besteht aus mehreren komplexen Komponenten.

Es ist weiterhin aus der WO02/36940 ein Filtersystem bekannt, das ebenfalls ein Filterelement in einem Gehäuse zeigt. Das Filterelement besitzt einen Stift, der mit einem im Gehäuse angeordneten Ventil zusammenarbeitet und auch dort für einen Bodenablauf sorgt. Für die Funktionsfähigkeit ist die korrekte Positionierung des Filterelementes von entscheidender Bedeutung.

Aus der US 5,922,196 ist ein Filtergehäuse bekannt, welches wiederum ein Ablaufventil aufweist, das von einem Filterelement betätigt wird. Auch hier handelt es sich um mehrere Bauteile, die das Ablaufventil bilden und einen relativ hohen Montageaufwand erfordern.

In der Druckschrift DE 197 46 752 A1 wird ein Ölfilter mit einem ringförmigen Filtereinsatz beschrieben, welcher in einem Filtergehäuse aufgenommen ist, das üblicherweise von einem Gehäusedeckel zu verschließen ist. Um für Wartungsarbeiten den Filtereinsatz austauschen zu können, wird der Deckel abgeschraubt, wobei darauf geachtet werden muss, dass in dem Filtergehäuse verbliebenes Restöl nicht versehentlich ausläuft und zu Verschmutzungen führt. Dieses Problem stellt sich insbesondere bei Ölfiltern, die in Schräglage eingebaut werden.

Die Druck schrift EP 1 159 998 A2 offen bart eine ring förmig aus gebildete feder spange zum Verschließen der Ablass öffnungades fietergehäuses. Bei dieser Druchschrift wird die Feder spange über den Stütz Körper öffnung des gehäuse bodens einsteckbar ist, betätigte

Um vor dem Öffnen des Deckels das im Filtergehäuse befindliche Öl ablassen zu können, sind Ölfilterausführungen mit einer Ablassschraube bekannt, die manuell zu öffnen ist und über die das verbliebene Öl aus dem Filtergehäuse abgelassen werden kann. Die manuelle Betätigung der Ablassschraube ist jedoch verhältnismäßig mühsam und aufwendig, zudem setzt dies entsprechende Einbauverhältnisse voraus, die einen Zugang zur Ablassschraube ermöglichen.

Der Erfindung liegt das Problem zugrunde, einen Flüssigkeitsfilter in der Weise weiterzubilden, dass mit einfachen Maßnahmen im Filtergehäuse verbliebene Flüssigkeit abgelassen werden kann.

Dieses Problem wird erfindungsgemäß mit den Merkmalen des Anspruches 1 gelöst. Die Unteransprüche geben zweckmäßige Weiterbildungen an.

Bei dem erfindungsgemäßen Flüssigkeitsfilter beaufschlagt das Filterelement im Filtergehäuse ein Verschlussteil, welches in einer Schließposition eine Ablassöffnung im Filtergehäuse versperrt und in Öffnungsposition die Ablassöffnung freigibt. Die Bewegung des Filterelementes bei dessen Einsetzen bzw. Entfernen aus dem Filtergehäuse wird als Stellbewegung für die Überführung des Verschlussteiles zwischen dessen Öffnungs- und Schließposition herangezogen. Auf diese Weise ist ein selbsttätiges Öffnen und Schließen der Ablassöffnung und dementsprechend ein automatisches Ablassen der verbliebenen Flüssigkeit im Filtergehäuse möglich. Weitere, insbesondere manuelle Eingriffe zum Ablassen der Flüssigkeit sind nicht erforderlich. Das Ablassen erfolgt automatisch beim Entfernen des Filterelementes aus seiner Betriebsposition im Filtergehäuse. Umgekehrt wird das Verschlusselement beim Einsetzen des Filterelementes in seine Betriebsposition im Filtergehäuse automatisch geschlossen, so dass der Filter wieder seine reguläre Reinigungsfunktion ausüben kann. Das Verschlussteil ist eine Federspange. Die Federspange ist ringförmig ausgebildet und weist eine zentrale Ausnehmung auf, die in Einbaulage der Federspange im Filtergehäuse auf einem Ablaufstutzen aufsitzt, über den die gereinigte Flüssigkeit nach Passieren des Filterelementes im regulären Filterbetrieb aus dem Filtergehäuse abgeleitet wird.

In einer zweckmäßigen Ausführung ist das Verschlussteil in Richtung seiner Öffnungsposition kraftbeaufschlagt, so dass das Verschlussteil bei einem Entfernen des Filterelementes selbsttätig auf Grund der einwirkenden Kräfte in die Öffnungsposition verstellt und die Ablassöffnung geöffnet wird. Beim Einsetzen des Filterelementes wird das Verschlussteil gegen die Öffnungskraft in die Schließposition verstellt.

Gemäß einer alternativen, zweckmäßigen Ausführung kann es aber auch angezeigt sein, dass die Öffnungs- und Schließbewegung des Verschlussteiles unmittelbar mit der Bewegung des Filterelementes gekoppelt ist. In dieser Ausführung kann auf eine Kraftbeaufschlagung des Verschlussteiles verzichtet werden.

Als Verschlussteil wird - wie bereits erwähnt - eine Federspange verwendet, an der ein Dichtpfropfen zum Verschließen der Ablassöffnung befestigt ist. Die Federspange steht unter einer Eigenspannung, die die Spange in ihre Öffnungsposition kraftbeaufschlagt. Beim Einsetzen des Filterelementes wird die Federspange gegen ihre Eigenspannung verformt und in Schließposition beaufschlagt, woraufhin der Dichtpfropfen auf die Ablassöffnung aufgesetzt wird und diese versperrt.

Zur Erzeugung der Eigenspannung kann die Federspange, die vorteilhaft aus einem dünnwandigen Blech besteht, dreidimensional gewölbt sein, wobei der Bereich des Dichtpfropfens, der in Schließposition auf dem Boden aufsitzt, zurückversetzt ist, ein mittlerer Bereich dagegen erhöht ausgebildet ist, da in diesem mittleren Bereich die Federspange zweckmäßig von dem Filterelement in ihre Schließposition gedrückt wird. Auf diese Weise kann mit einfachen Mitteln ein Verschlusselement mit einer ausreichenden Eigenspannung hergestellt werden.

Weitere Vorteile und zweckmäßige Ausführungen sind den weiteren Ansprüchen, der Figurenbeschreibung und den Zeichnungen zu entnehmen. Es zeigen:
- Fig. 1: einen Schnitt durch einen Ölfilter für Kraftfahrzeuge, mit einem hohlzylindrischen Filterelement in einem Filtergehäuse, welches von einem Gehäusedeckel zu verschließen ist, wobei der Gehäusedeckel teilweise angehoben und das Filterelement ebenfalls teilweise aus seiner regulären Betriebsposition im Filtergehäuse herausgehoben ist,
- Fig. 2: der Ölfilter gemäß Fig. 1, jedoch mit dem Filterelement in seiner vollständig in das Filtergehäuse eingeführten, regulären Betriebsposition, in welcher eine Ablassöffnung am Boden des Filtergehäuses verschlossen ist,
- Fig. 3: eine Ansicht von oben in das Filtergehäuse bei entferntem Filterelement.

In den Figuren sind gleiche Bauteile mit gleichen Bezugszeichen versehen.

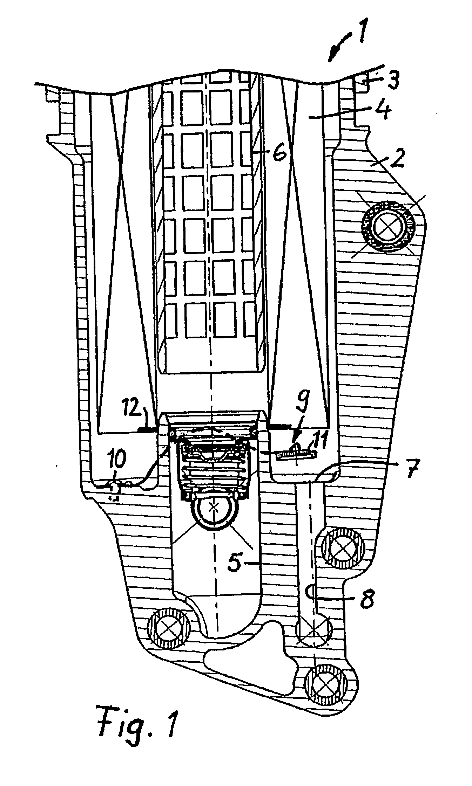

Der in Fig. 1 dargestellte Ölfilter 1 wird insbesondere in Kraftfahrzeugen eingesetzt, beispielsweise zur Reinigung von Getriebeöl oder von Schmieröl, welches diversen Lagerstellen am Motorblock zuzuführen ist. Der Ölfilter 1 umfasst ein Filtergehäuse 2, in welchem ein Filterelement 4 aufgenommen ist und das von einem Gehäusedeckel 3 zu verschließen ist. Das Filterelement 4 ist ringförmig bzw. hohlzylindrisch ausgeführt und wird zur Reinigung des Öls radial von außen nach innen angeströmt. Die Reinseite befindet sich demnach im zentrischen Innenraum des Filterelementes, aus dem das gereinigte Öl axial über einen Ablaufstutzen 5 abgeleitet wird. Zentrisch im Inneren des Filterelementes 4 befindet sich ein Trägerrohr 6, welches dem Filterelement zusätzliche Stabilität verleiht und insbesondere in das Filterelement eingeschoben wird.

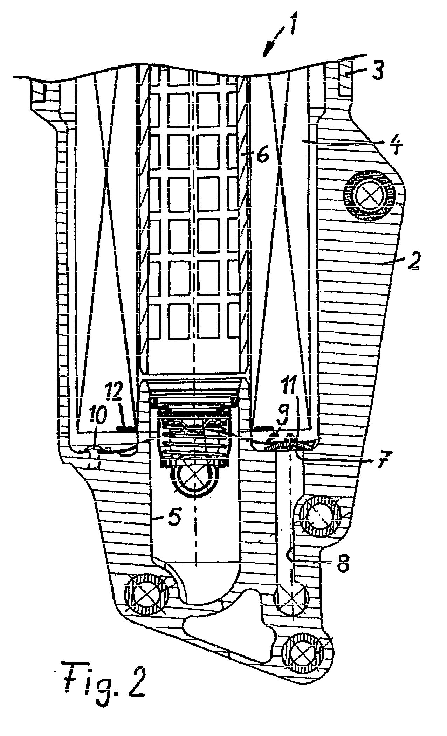

Am ringförmigen Boden im Filtergehäuse, auf dem das Filterelement 6 in seiner Betriebsposition stirnseitig aufsitzt, befindet sich eine Ablassöffnung 7, die in einen Ablasskanal 8 mündet, über den bei einem Entfernen des Filterelementes 4 aus dem Ölfilter, beispielsweise für Wartungszwecke, das im Filtergehäuse verbliebene Restöl abgeleitet werden kann und beispielsweise in eine Ölwanne der Brennkraftmaschine geführt werden kann. Die Ablassöffnung 7 befindet sich insbesondere bei einer geneigten Einbaulage des Filters am tiefsten Punkt des Filtergehäuse-Innenraumes, um die größtmögliche Menge Restöls ableiten zu können. Die Ablassöffnung 7 ist von einem Dichtpfropfen 11 zu verschließen, welcher an einem als Federspange ausgeführten Verschlussteil 9 angeordnet ist, welches etwa ringförmig ausgeführt ist und um den zentralen Ablaufstutzen 5 am Boden im Filtergehäuse gelegt ist. Die Federspange 9 besteht aus einem dünnwandigen Blech, welches elastisch verformbar ist. Die Federspange 9 ist auf ihrer der Ablassöffnung 7 gegenüberliegenden Seite über eine Befestigungsgeometrie, insbesondere eine Befestigungsschraube 10 fest mit dem Filtergehäuse 2 verbunden. Die Federspange 9 ist dreidimensional geformt, wobei in Einbaulage ein mittlerer Abschnitt zwischen dem Befestigungspunkt an der Befestigungsschraube 10 und dem gegenüberliegenden Dichtpfropfen 11 erhöht ausgebildet ist, der Befestigungspunkt und der den Dichtpfropfen 11 tragende Abschnitt dagegen nach unten zurückgesetzt sind und beide auf gleicher Höhe liegen. Auf Grund der Eigenspannung befindet sich die Federspange 9 für den Fall, dass keine äußeren Kräfte auf sie einwirken, in ihrer Öffnungsstellung. Durch eine Beaufschlagung in Achsrichtung, hervorgerufen durch das Einführen des Filterelementes 4 in seine Betriebsstellung, in welcher die axiale Stirnseite des Filterelementes auf die elastisch verformbare Federspange 9 einwirkt, wird diese in ihre Schließposition verstellt, in welcher der Dichtpfropfen 11 flüssigkeitsdicht auf der Ablassöffnung 7 aufsitzt. Diese Verhältnisse sind in Fig. 2 dargestellt. Die Federspange 9 wird hierbei vorteilhaft von einem Vliesring 12 beaufschlagt, der sich an der axialen Stirnseite des Filterelementes 4 befindet und Bestandteil des Filterelementes ist. Auf Grund der Eigenelastizität der Federspange 9 wird diese wieder selbsttätig in ihre Öffnungsstellung überführt, sobald das Filterelement 4 axial aus seiner Betriebsstellung herausgehoben und aus dem Filtergehäuse entfernt wird.

Gemäß einer alternativen Ausführung kann es auch zweckmäßig sein, sowohl die Öffnungsbewegung als auch die Schließbewegung des Verschlussteiles an die axiale Stellbewegung des Filterelement bzw. des zentrisch angeordneten Trägerrohrs zu koppeln und über diese Stellbewegung zu steuern.

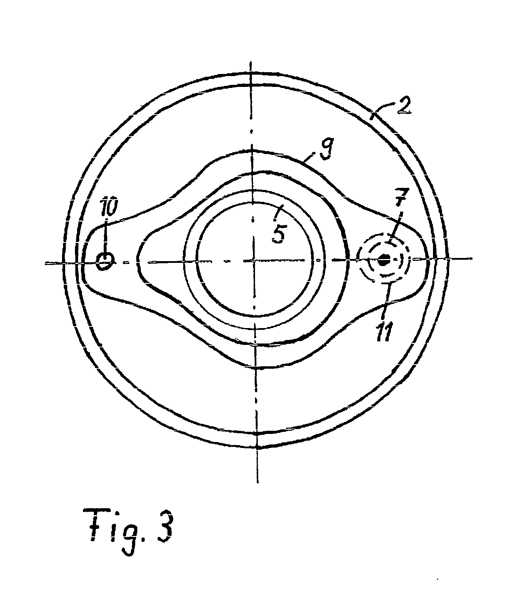

Der Draufsicht gemäß Fig. 3 ist zu entnehmen, dass Befestigungsschraube 10 und Dichtpfropfen 11 auf gegenüberliegenden Seiten in dem ringförmigen Gehäuseboden des um den Ablaufstutzen 5 gelegten Verschlussteiles 9 angeordnet sind. Das Verschlussteil 9 ist ringförmig gestaltet und besteht aus einem dünnwandigen Blech, wobei die Blecharme des Verschlussteiles, welche den Abschnitt mit der Befestigungsschraube 10 und den Abschnitt mit dem Dichtpfropfen 11 verbinden, schmal ausgebildet sind, wodurch eine relativ hohe Elastizität im Verschlussteil 9 gebildet ist.

## Patentansprüche

1. Flüssigkeitsfilter, insbesondere Ölfilter für Kraftfahrzeuge, mit einem in einem Filtergehäuse (2) aufgenommenen Filterelement (4), dessen Rohseite von der zu reinigenden Flüssigkeit angeströmt wird, wobei im Filtergehäuse (2) eine Ablassöffnung (7) angeordnet ist, die über ein zwischen Öffnungs- und Schließposition zu verstellendes Verschlussteil (9) zu öffnen bzw. zu verschließen ist, wobei das Verschlussteil eine Felderspange ist, an der ein Dichtpfropfen zum Verschließen der Ablassöffnung befestigt ist,
**dadurch gekennzeichnet,**
**dass** die Federspange (9) ringförmig ausgebildet ist und eine zentrale Ausnehmung aufweist, die einen Ablaufstutzen (5) im Filtergehäuse (2) umschließt und dass eine axiale Stirnseite des Filterelements (4) das Verschlussteil (9) beaufschlagt.

2. Flüssigkeitsfilter nach Anspruch 1,
**dadurch gekennzeichnet,**
**dass** das Verschlussteil (9) in seine Öffnungsposition kraftbeaufschlagt ist und von dem in das Filtergehäuse (2) eingesetzten Filterelement (4) in die Schließposition gedrückt wird.

3. Flüssigkeitsfilter nach Anspruch 2 und 3,
**dadurch gekennzeichnet,**
**dass** die Federspange (9) unter Eigenspannung steht, die die Federspange (9) in ihre Öffnungsposition kraftbeaufschlagt.

4. Flüssigkeitsfilter nach einem der vorherigen Ansprüche,
**dadurch gekennzeichnet,**
**dass** die Federspange (9) im Bereich des Dichtpfropfens (11) zurückversetzt ist und in einem mittleren, von dem Filterelement (4) beaufschlagten Bereich erhöht ausgebildet ist.

5. Flüssigkeitsfilter nach Anspruch 4,
**dadurch gekennzeichnete**
**dass** die Stirnseite des Filterelements (4) von einem Vliesring (12) eingefasst ist, der das Verschlussteil (9) beaufschlagt.

6. Flüssigkeitsfilter nach einem der Ansprüche 1 bis 5,
**dadurch gekennzeichnet,**
**dass** das Filterelement (4) hohlzylindrisch ausgebildet und zentrisch im Filterelement (4) ein Trägerrohr (6) angeordnet ist, bei dessen axialer Verstellung das Verschlussteil (9) zwischen Schließposition und Öffnungsposition zu verstellen ist.

## Claims

1. Liquid filter, in particular oil filter for motor vehicles, with a filter element (4) received in a filter housing (2), the entry side of which receives the liquid to be cleaned, a drain hole (7) being disposed in the filter housing (2) which is to be opened and closed by a displaceable locking device between an opening position and a closing position, the locking device being a spring clasp onto which a sealing plug for closing the drain hole is attached,
**characterized in**
**that** the spring clasp (9) has a ring-shaped design and features a central recess which encloses a discharge flow connection (5) in the filter housing (2) and that an axial front side of the filter element (4) exerts a force on the locking device (9).

2. Liquid filter according to claim 1,
**characterized in**
**that** the locking device (9) is forced into its opening position by strength and pushed into the closing position by the filter element (4) inserted into the filter housing (2).

3. Liquid filter according to claim 2 and 3,
**characterized in**
**that** the spring clasp (9) is under internal stress which forces the spring clasp (9) into its opening position.

4. Liquid filter according to one of the above claims,
**characterized in**
**that** the spring clasp (9) is set back in the area of the sealing plug (11) and elevated in a central area to which a force is applied by the filter element (4).

5. Liquid filter according to claim 4,
**characterized in**
**that** the front side of the filter element (4) is surrounded by a fleece ring (12) which exerts a force on the locking device (9).

6. Liquid filter according to one of the claims 1 to 5,
**characterized in**
**that** the filter element (4) has a hollow cylindrical design and that a support pipe (6) is disposed centrically in the filter element (4), the axial displacement of which switches the locking device (9) between a closing position and an opening position.

## Revendications

1. Filtre à liquide, en particulier filtre à huile pour véhicule automobiles, avec un élément filtrant (4) logé dans un boîtier de filtre (2) et dont le côté non filtré reçoit le liquide non filtré, une ouverture d'évacuation (7) étant disposée dans le boîtier de filtre (2) qui est fermée ou ouverte entre une position d'ouverture et une position de fermeture par un dispositif de blocage (9) déplaçable, le dispositif de blocage étant une agrafe à ressort sur laquelle est fixé un bouchon étanche pour fermer l'ouverture d'évacuation,
**caractérisé en ce**
**que** l'agrafe à ressort (9) est réalisée en forme annulaire et présente un évidement central qui entoure une tubulure de sortie (5) dans le boîtier de filtre (2) et qu'une face frontale de l'élément filtrant (4) alimente le dispositif de blocage (9).

2. Filtre à liquides selon la revendication 1,
**caractérisé en ce**
**que** le dispositif de blocage (9) est amené par force en position d'ouverture et poussé en position de fermeture par l'élément filtrant (4) inséré dans le boîtier de filtre (2).

3. Filtre à liquides selon la revendication 2 et 3,
**caractérisé en ce**
**que** l'agrafe à ressort (9) se trouve sous contrainte résiduelle laquelle amène par force l'agrafe à ressort (9) dans sa position d'ouverture.

4. Filtre à liquides selon une des revendications précédentes,
**caractérisé en ce**
**que** l'agrafe à ressort (9) est placée en position reculée dans la zone du bouchon étanche (11) et réalisée de manière élevée dans une zone centrale alimentée par l'élément filtrant (4).

5. Filtre à liquides selon la revendication 4,
**caractérisé en ce**
**que** la face frontale de l'élément filtrant (4) est bordée par une bague en non-tissé (12) qui alimente le dispositif de blocage (9).

6. Filtre à liquides selon une des revendications 1 à 5,
**caractérisé en ce**
**que** l'élément filtrant (4) est réalisé en forme de cylindre creux et qu'un tube porteur (6) est disposé de manière centrée dans l'élément filtrant (4), et lors du déplacement axial de ce tube le dispositif de blocage (9) se déplace entre la position de fermeture et la position d'ouverture.
